# EUROPÄISCHE PATENTSCHRIFT

(11) **EP 3 611 067 B1**
(45) Veröffentlichungstag und Bekanntmachung des Hinweises auf die Patenterteilung: **22.10.2025**
(21) Anmeldenummer: 19189990.5
(22) Anmeldetag: 05.08.2019
(51) Int. Cl.: B60W 30/02

(54) **VERFAHREN ZUR DURCHFÜHRUNG EINES ABSCHLEPPVORGANGS SOWIE KORRESPONDIERENDES KRAFTFAHRZEUG.**
METHOD FOR CARRYING OUT A TOWING PROCESS AND CORRESPONDING MOTOR VEHICLE.
PROCEDÉ POUR EFFECTUER UN PROCESSUS DE REMORQUAGE ET VÉHICULE AUTOMOBILE CORRESPONDANT.

(30) Priorität: 13.08.2018 DE 102018213578
(43) Veröffentlichungstag der Anmeldung: 19.02.2020
(73) Patentinhaber: AUMOVIO Autonomous Mobility Germany GmbH, 85057 Ingolstadt (DE)
(72) Erfinder: Fendt, Günter Anton, 90411 Nürnberg (DE)
(74) Vertreter: Aumovio Corporation

(56) Entgegenhaltungen:
- DE-A1- 102014 213 050
- DE-A1- 102015 201 981
- DE-A1- 102018 100 029
- DE-T5- 10 297 674
- DE-U1- 20 207 743
- US-A1- 2014 324 248
- US-A1- 2015 239 436
- US-A1- 2017 235 307

## Beschreibung

Die Erfindung betrifft ein Verfahren zur Durchführung eines Abschleppvorgangs sowie ein korrespondierendes Kraftfahrzeug.

Heutzutage sind Fahrerassistenzsysteme nicht mehr aus Kraftfahrzeugen wegzudenken. Fahrerassistenzsysteme weisen Funktonen auf, die den Fahrer eines Fahrzeugs beim Fahren unterstützen. Neben der Steigerung der Verkehrssicherheit ist insbesondere eine Komfortsteigerung und Entlastung des Fahrers Ziel solcher Systeme. Dies wird insbesondere dadurch erreicht, dass das System das Umfeld erfasst bzw. aufzeichnet und die erfassten Informationen verarbeitet und dann entsprechende Fahrmanöver durchführt oder dem Fahrer die Umfeldinformationen gut erkennbar wiedergibt. Hierfür kommen insbesondere Kameras zum Einsatz, die zumindest bereichsweise den Raum um das Fahrzeug herum erfassen. Bekannt sind beispielsweise Frontkameras, die im Bereich der Windschutzscheibe angeordnet sind und einen Bereich vor dem Fahrzeug erfassen. Ferner gehören Rückfahrkameras zum Stand der Technik. Diese erfassen bei einer Rückwärtsfahrt einen hinter dem Fahrzeug liegenden Bereich.

Auch wenn die Fahrzeuge technisch immer gehobener bzw. ausgereifter werden, kann es durchaus passieren, dass ein Fahrzeug einmal liegenbleibt und dann abgeschleppt werden muss. Neben dem Einsatz von Abschleppfahrzeugen erfolgt ein Abschleppen häufig auch von privater Hand. Das bedeutet insbesondere, dass ein normales Fahrzeug als Zugfahrzeug eingesetzt wird und das abzuschleppende Fahrzeug mittels eines Seils abschleppt. Indem ein Abschleppszenario nicht alltäglich ist, ist der Fahrzeugführer des Zugfahrzeugs häufig mit der Situation überfordert, so dass Fehlverhalten leicht passieren und es folglich zu gefährlichen Situationen kommen kann. Insbesondere wenn das Seil auf Zug kommt und damit ein starker Ruck einhergeht, kann es passieren, dass der Fahrer des Zugfahrzeugs unkontrollierte Lenk- und/oder Bremseingriffe vornimmt, die zu einer Verkehrsgefährdung führen können.

In der US 2015/239436 A1 ist ein Verfahren beschrieben zur Durchführung eines Abschleppvorgangs eines sich autonom bewegenden ersten Fahrzeugs, welches ein sich autonom bewegendes zweites Fahrzeug abschleppt, wenn das zweite Fahrzeug einen bestimmten Defekt aufweist und infolgedessen gestoppt bzw. abgestellt wurde, wobei in diesem Zustand eine Blockierung der Räder des zweiten Fahrzeugs über eine Radblockiereinheit erfolgt. Zur Durchführung des Abschleppvorgangs wird zunächst mittels einer Kamera des ersten Fahrzeugs eine vordere Fläche des zweiten Fahrzeugs erfasst und basierend darauf wird das erste Fahrzeug in einem Abstand vor dem zweiten Fahrzeug positioniert und in der gleichen Richtung wie das zweite Fahrzeug ausgerichtet. Anschließend wird das erste Fahrzeug nach hinten in Richtung der Vorderseite des zweiten Fahrzeugs bewegt und es wird eine an der Rückseite des ersten Fahrzeugs angeordnete Abschleppvorrichtung ausgefahren und mit einem Schleppknauf des zweiten Fahrzeugs verbunden. In diesem verbundenen Zustand wird das erste Fahrzeug nach vorne bewegt, wodurch eine Zugkraft auf den Schleppknauf ausgeübt wird, und wodurch bei Vorliegen einer bestimmten Zugkraft über einen speziellen Verbindungsmechanismus die Radblockiereinheit deaktiviert und das zweite Fahrzeug durch das erste Fahrzeug fortbewegt wird.

Auch die US 2017/235307 A1 beschreibt ein Verfahren zur Durchführung eines Abschleppvorgangs eines ersten Fahrzeugs. Wenn festgestellt wurde, dass sich das erste Fahrzeug in einem Zustand des Abschleppens eines Objekts befindet, wird die Höchstgeschwindigkeit des ersten Fahrzeugs auf einen Wert gesetzt, der niedriger ist als die Höchstgeschwindigkeit, wenn sich das erste Fahrzeug nicht in einem Zustand des Abschleppens befindet. Zur Feststellung, ob sich das erste Fahrzeug in einem Zustand des Abschleppens befindet, weist das erste Fahrzeug einen Abschlepperkennungssensor auf, welcher als ein Schallwellensensor, ein Infrarotsensor und eine Kamera ausgebildet sein kann, und welcher in der Nähe eines Kofferraumdeckels oder einer Heckscheibe angebracht ist, um ein abgeschlepptes Objekt hinter dem ersten Fahrzeug zu erkennen. Der Abschlepperkennungssensor kann auch an einer Verbindungsvorrichtung, wie beispielsweise einer Anhängerkupplung mit Elementen wie einer Zugvorrichtung und einer Kupplungskugel, angebracht sein, die zum Abschleppen des Objekts vorgesehen ist und kann dabei das abgeschleppte Objekt hinter dem Fahrzeug als Reaktion auf die Verbindung des Objekts mit der Verbindungsvorrichtung erkennen.

Die DE 202 07 743 U1 beschreibt eine Abschleppeinrichtung eines Fahrzeuges, wobei im Chassis des Fahrzeugs ein optisches Messsystem integriert ist, das den Abstand zu einem anderen am Abschleppvorgang beteiligten Fahrzeug ermittelt. Das Messsystem kann beispielsweise aus einem Sender und einem Detektor bestehen, wobei vom Sender ein optisches Signal ausgesandt wird, das am anderen Fahrzeug reflektiert und am Detektor wieder aufgefangen wird. Dabei kann das Messsystem am hinteren Teil des (Zug-)Fahrzeugs angeordnet sein. Stellt sich bei der Messung heraus, dass sich der Abstand verkleinert, so kann daraus geschlossenen werden, dass das die beiden Fahrzeuge verbindende Element nicht mehr auf Zug ist und die Gefahr des Aufrollens besteht. Umgekehrt, wenn sich der Abstand vergrößert, kann der Zug zu groß werden und sich der Kontakt zwischen den Fahrzeugen möglicherweise lösen. In Abhängigkeit der Messdaten wird daher auf das Bremssystem eines der beiden Fahrzeuge eingewirkt.

Die DE 102 97 674 T5 beschreibt ein Verfahren zum Betrieb eines Fahrzeugsteuersystems eines Fahrzeugs, das eine Anzahl an steuerbaren Fahrzeuguntersystemen in Abhängigkeit von voreingestellten Fahrzeugbetriebsarten steuern kann. Dabei wird ein momentaner Betriebszustand unter Verwendung zumindest eines Sensors erfasst und es wird der Zugriff auf zumindest eine der voreingestellten Betriebsarten in Reaktion auf einen Ausgangswert des zumindest einen Sensors einschränkt. Als ein solcher Sensor ist auch ein Abschleppsensor genannt, der so ausgebildet ist, dass er erkennt, wenn das Fahrzeug zum Ziehen eines Anhängers und dergleichen verwendet wird, und der ein Reaktionssignal an eine zentrale Steuereinheit des Fahrzeugsteuersystems abgibt, beispielsweise in Reaktion auf die Kraft, die auf eine Anhängerkupplung einwirkt, wenn eine abnehmbare Anhängerkupplung in ihrer Position angeordnet ist, wenn ein Anhänger elektrisch an das Fahrzeug angeschlossen ist, und dergleichen. So ist beispielsweise ein Sportmodus nicht auswählbar, wenn der Abschleppsensor anzeigt, dass ein Anhänger oder dergleichen auf die Anhängerkupplung aufgesetzt ist

In DE 10 2014 213 050 A1 wird eine mobile Vorrichtung zum Bereitstellen von Energie für ein Kraftfahrzeug beschrieben, wobei die Vorrichtung eine Ladeschnittstelleneinrichtung umfasst, welche dazu ausgelegt ist, Hochvolt-Energie mittels einer Energieübertragung für das Kraftfahrzeug bereitzustellen. Weiterhin umfasst die Vorrichtung eine Kommunikationsschnittstelleneinrichtung, welche mit der Ladeschnittstelleneinrichtung gekoppelt ist und welche dazu ausgelegt ist, Daten mit dem Kraftfahrzeug auszutauschen. Die Ladeschnittstelleneinrichtung kann zur Übertragung von elektrischer Energie von einem weiteren Kraftfahrzeug an das zu ladende Kraftfahrzeugen ein Leistungsübertragungskabel aufweisen, verwendet werden. Dabei kann ein Durchhängen des Leistungsübertragungskabels mittels einer Kamera erfasst werden, wobei mittels der erfassten Durchhängung eine Regelung des Abstands erfolgt.

Die DE 10 2018 000 029 A1 beschreibt ein Verfahren zur Beschränkung des Betriebs eines abschleppenden Fahrzeugs in Abhängigkeit von den einem abgeschleppten Fahrzeug zugeordneten Einschränkungen. Wenn es sich beispielsweise bei dem abgeschleppten Fahrzeug um ein elektrifiziertes Fahrzeug handelt, kann ein Abschleppassistenzsystem den Betrieb des abschleppenden Fahrzeugs beschränken, indem Steuersignale an das abschleppende Fahrzeug ausgegeben werden, welche die Höchstgeschwindigkeit des abschleppenden Fahrzeugs während des Abschleppens des abgeschleppten Fahrzeugs beschränken. Weiter werden bestimmte Aktionen zwischen dem abschleppenden Fahrzeug und dem abgeschleppten Fahrzeug koordiniert und so beispielsweise aufgenommene Bilder von einer nach hinten ausgerichteten Kamera des abgeschleppten Fahrzeugs an das abschleppende Fahrzeug übertragen und umgekehrt.

Ausgehend hiervon ist es nun Aufgabe der Erfindung, bei einem Abschleppvorgang dem Fahrzeugführer eines Zugfahrzeugs eine Assistenzfunktion bereitzustellen, so dass der Abschleppvorgang sicher und kontrolliert vonstattengehen kann und die Situation nicht noch misslicher wird.

Die Aufgabe wird durch den Gegenstand der unabhängigen Ansprüche gelöst.

Vorteilhaft hierbei ist, dass ein Abschleppvorgang in einem kontrollierten bzw. besonnenen Umfang stattfindet, da die Handhabung bzw. das Betreiben des Zugfahrzeugs an die gegenwärtige, meistens ungewohnte Situation automatisch angepasst wird.

Bei der Abschleppgeschwindigkeit kann es sich um eine fest vorgegebene Geschwindigkeit handeln. Es ist aber auch möglich, dass die Abschleppgeschwindigkeit durch den Zugfahrzeugführer individuell eingestellt werden kann. Dies hat den Vorteil, dass Zugfahrzeugführer, die schon öfters abgeschleppt haben, eine erhöhte Abschleppgeschwindigkeit eingeben können, woraufhin unerfahrene Fahrzeugführer, die Abschleppgeschwindigkeit auf einen niedrigeren Wert einstellen können. Von Vorteil ist es, wenn eine maximale Abschleppgeschwindigkeit, die während eines Abschleppmodus nicht überschritten werden darf, vorgegeben ist und insbesondere nicht verändert werden kann.

Die Anpassung der Abschleppgeschwindigkeit kann insbesondere dadurch erfolgen, dass die vom Zugfahrzeug zum Zeitpunkt der Aktivierung des Abschleppmodus gefahrene Geschwindigkeit mit der Abschleppgeschwindigkeit verglichen wird. Ist die Fahrzeuggeschwindigkeit schneller als die Abschleppgeschwindigkeit, dann wird die Geschwindigkeit mit der sich das Zugfahrzeug vorbewegen kann, auf den vordefinierten Wert gedrosselt. Liegt die Geschwindigkeit unterhalb dem Wert der Abschleppgeschwindigkeit dann wird die gegenwärtige Geschwindigkeit insbesondere beigehalten. Es ist auch möglich, dass die Geschwindigkeit auf die Abschleppgeschwindigkeit erhöht wird. Dies erfolgt insbesondere dann, wenn der Zugfahrzeugführer vorher darüber informiert wird.

Die Aktivierung des Abschleppmodus kann dem Zugfahrzeugführer mitgeteilt werden. Dies kann sowohl optisch, wie auch akustisch erfolgen.

Der Abschleppmodus wird durch die Zuhilfenahme einer Kamera zur Erfassung eines hinter dem Fahrzeug liegenden Bereichs aktiviert. Bei der Kamera handelt es sich um eine Rückfahrkamera. Hierbei wird der hinter dem Fahrzeug liegende Bereich mittels der Kamera erfasst, Bilddaten erzeugt und in den Bilddaten wird zumindest ein Abschleppmittel erkannt.

Bei dem Abschleppmittel handelt es sich um ein Abschleppseil. Das Abschleppseil ist bevorzugt flexibel bzw. biegsam ausgebildet, so dass es ungespannt bzw. durchhängen kann, aber zudem auch gespannt werden kann.

Bei dem zur Aktivierung des Abschleppmodus erkannten Abschleppmittel handelt es sich um ein durchhängendes und/oder ungespanntes und/oder bewegliches Abschleppseil.

Es ist grundsätzlich auch möglich, dass der Abschleppmodus über die Betätigung einer Warnblinkertaste in dem Zugfahrzeug, insbesondere in Kombination mit zumindest einem weiteren Indiz für einen Abschleppmodus aktiviert werden kann. Auch ist es denkbar, dass der Abschleppmodus via Car2Car-Kommunikation von einem der beteiligten Fahrzeuge aktiviert wird.

Von Vorteil ist es, wenn der Abschleppmodus automatisch aktiviert wird. Es also keinerlei Tat bzw. Handlung durch den Zugfahrzeugführer benötigt.

In einer bevorzugten Ausgestaltung wird der Abschleppmodus automatisch beendet. Dies erfolgt insbesondere dann, wenn in den Bilddaten ein gespanntes Abschleppseil erkannt wird und/oder wenn eine vordefinierte Zugkraft detektiert wird, die an dem Abschleppmittel bzw. Abschleppseil vorherrscht.

Bevorzugt wird nach Beendigung des Abschleppmodus die Abschleppgeschwindigkeit wieder aufgehoben. Nach Beendigung des Abschleppmodus kann der Zugfahrzeugfahrer dann grundsätzlich das Zugfahrzeug wieder mit einer von ihm gewünschten Fahrzeuggeschwindigkeit fahren.

Von Vorteil ist es, wenn der Zugfahrzeugführer während des Abschleppvorgangs bzw. zumindest während des Vorliegens des Abschleppmodus über den Zustand des Abschleppmittels informiert wird. Dies kann insbesondere dadurch erfolgen, dass spätestens bei Aktivierung des Abschleppmodus der von der Kamera erfasste Bereich, insbesondere zumindest ein erfasster Bereich, der das Abschleppmittel umfasst, auf einer Anzeigevorrichtung dargestellt wird. Die Anzeige erfolgt zumindest bis zum Beenden des Abschleppmodus, bevorzugt bis zum Ende des Abschleppvorgangs.

Gemäß einem zweiten Aspekt bezieht sich die Erfindung auf ein Kraftfahrzeug gemäß Anspruch 4.

Das erfindungsgemäße Kraftfahrzeug weist den Vorteil auf, dass hierdurch ein möglichst komfortables und sicheres Abschleppen ermöglicht wird. Ein Zugfahrzeugführer kann hierdurch während eines Abschleppvorgangs zuverlässig über die Position des Abschleppmittels informiert werden, so dass unangenehme Überraschungen ausbleiben.

Der Zustand des Abschleppseils wird mittels der Bildverarbeitungseinrichtung erkannt bzw. ausgewertet. Dabei ist die Bildverarbeitungseinrichtung derart ausgebildet, dass mit ihr ein durchhängendes und/oder sich bewegendes Abschleppseil erkannt wird, wodurch ein Abschleppmodus aktiviert wird und/oder ein gespanntes und/oder straffes Abschleppseil erkannt wird, wodurch der Abschleppmodus wieder beendet wird.

Dabei handelt es sich bei der Kamera um eine Rückfahrkamera. Hierdurch kommt es zu einer Funktionserweiterung der aus dem Stand der Technik bekannten Rückfahrkameras. Wie der Name schon sagt, werden die bekannten Rückfahrtkameras gegenwärtig nur dann verwendet bzw. sind aktiv, wenn ein Fahrzeug rückwärtsfährt, insbesondere mit einer Geschwindigkeit unter einem Schwellwert. Bewegt sich ein Fahrzeug vorwärts, dann sind diese nicht aktiv. Im erfindungsgemäßen Kamerasystem ist die Rückfahrkamera nun auch bei einer Vorwärtsfahrt des Zugfahrzeugs zumindest zeitweise aktiv und erfasst einen hinter dem Fahrzeug liegenden Bereich. Denkbar ist, dass die Rückfahrkamera bei einer Vorwärtsfahrt erst aktiv wird, wenn auch ein Abschleppvorgang vorliegt. Grundsätzlich kann die Existenz eines Abschleppvorgangs automatisch erkannt werden, beispielsweise dadurch, dass an einem Abschlepphaken des Kraftfahrzeugs eine Kraft wird. Denkbar ist auch, dass die Rückfahrkamera im Großen und Ganzen dauernd aktiv ist, beispielsweise in einem sogenannten Dämmerschlaf verweilt, aber nur dann bei einer Vorwärtsfahrt die Umgebung erfasst, wenn ein Abschleppvorgang vorliegt.

Bevorzugt weist das Kamerasystem zumindest eine Anzeigevorrichtung auf. Hierdurch kann das von der Kamera aufgenommene Bild, also insbesondere die gegenwärtige Position bzw. der gegenwärtige Zustand des Abschleppmittels, dem Zugfahrzeugführer angezeigt werden. Der Zugfahrzeugführer wird somit von einer mit der Straffung des Abschleppseils einhergehenden Ruckbelastung nicht mehr überrascht, so dass Fehlverhalten unterbunden werden können.

In einer bevorzugten Ausgestaltung weist das Kamerasystem eine Steuereinheit auf. Die Steuereinheit ist derart ausgebildet, dass sie nach Erkennung eines Abschleppmittels und insbesondere Aktivierung eines Abschleppmodus, die Fahrzeuggeschwindigkeit in Einklang mit einer Abschleppgeschwindigkeit bringt, also die Fahrzeuggeschwindigkeit insbesondere auf eine Abschleppgeschwindigkeit regelt. Die Abschleppgeschwindigkeit kann im System bzw. in einer Speichereinheit hinterlegt sein. Es ist auch möglich, dass die Abschleppgeschwindigkeit durch den Zugfahrzeugführer individuell eingestellt werden kann. Von Vorteil ist es, wenn eine maximale Abschleppgeschwindigkeit vom System vorgegeben ist, die nicht überschritten werden kann, auch nicht durch eine individuelle Eingabe.

Die Steuereinheit ist bevorzugt derart ausgebildet, dass sie insbesondere die zum Zeitpunkt der Aktivierung des Abschleppmodus vorliegende Fahrzeuggeschwindigkeit mit der Abschleppgeschwindigkeit vergleicht. Ist die Fahrzeuggeschwindigkeit größer als die Abschleppgeschwindigkeit, also bewegt sich das Zugfahrzeug schneller als es im Abschleppmodus der Fall sein sollte, dann drosselt die Steuereinheit die Geschwindigkeit auf den vordefinierten Wert.

Ferner kann die Steuereinheit derart ausgebildet sein, dass sie nach einer Beendigung des Abschleppmodus die Abschleppgeschwindigkeit aufhebt, wodurch die Geschwindigkeit durch den Zugfahrzeugführer wieder frei wählbar bzw. einstellbar ist. Das Zugfahrzeug kann dann wieder mit einer von dem Zugfahrzeugführer vorgegebenen Geschwindigkeit wieder gefahren werden.

In einer bevorzugten Ausgestaltung weist das Kamerasystem einen Kraftsensor zur Messung einer Zugkraft in dem Abschleppmittel auf. Hierdurch lässt sich eine am Abschleppseil herrschende Zugkraft detektieren.

Weitere vorteilhafte Ausgestaltungen ergeben sich aus den Zeichnungen. Hierbei zeigen:
- Fig. 1:: eine schematische Darstellung einer Abschleppsituation;
- Fig. 2:: eine schematische Darstellung eines Flussdiagramms eines erfindungsgemäßen Verfahrens in einer Ausführungsform;
- Fig. 3:: eine schematische Darstellung eines Geschwindigkeitsverlaufs eines Zugfahrzeugs während eines Abschleppvorgangs in einer Ausgestaltung;
- Fig. 4:: eine schematische Darstellung einer erfindungsgemäßen Kamerasystems in einer Ausführungsform.

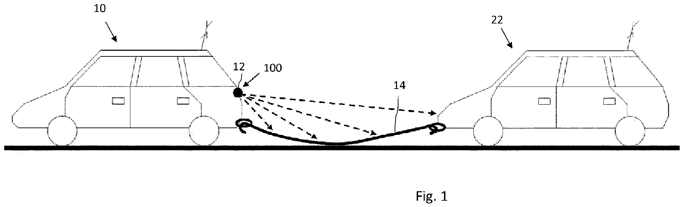

Figur 1 zeigt eine schematische Darstellung einer Abschleppsituation. Zu erkennen ist ein Zugfahrzeug 10, welches über ein als Abschleppseil ausgebildetes Abschleppmittel 14 ein anderes Fahrzeug 22 abschleppt. An dem Zugfahrzeug 10 ist ein Kamerasystem 100 mit einer Kamera 12 angeordnet. Der Zustand des Abschleppseils kann mittels des Kamerasystems 100 erkannt bzw. ausgewertet werden. In Abhängigkeit der Auswertung des Zustands des Abschleppmittels 14 wird ein Abschleppmodus aktiviert und/oder deaktiviert bzw. beendet. Bei der Kamera 12 handelt es sich um eine Rückfahrkamera, die auch bei einer Vorwärtsfahrt des Zugfahrzeugs 10 zumindest zeitweise aktiv ist und einen hinter dem Fahrzeug 10 liegenden Bereich erfasst.

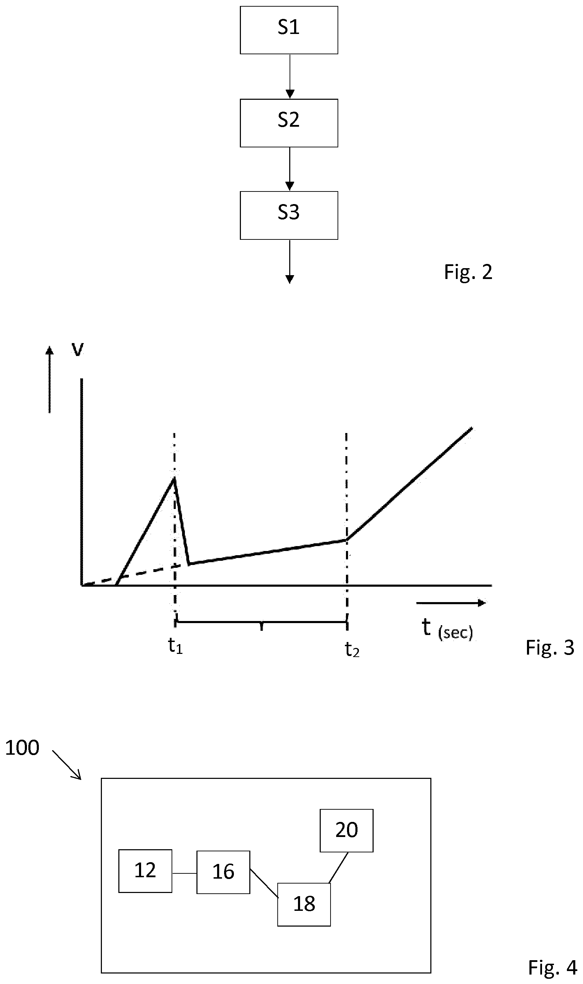

Figur 2 zeigt eine schematische Darstellung eines Flussdiagramms eines erfindungsgemäßen Verfahrens zur Durchführung eines Abschleppvorgangs in einer Ausführungsform. In einem ersten Schritt S1 wird ein Abschleppmodus aktiviert. Die Aktivierung erfolgt unter der der Zuhilfenahme einer Kamera 12, wobei ein hinter dem Fahrzeug 10 liegender Bereich mittels der Kamera 12 erfasst, Bilddaten erzeugt und in den Bilddaten zumindest ein Abschleppmittel 14, genauer ein durchhängendes Abschleppseil, erkannt wird.

Ist der Abschleppmodus aktiviert worden, dann erfolgt in einem weiteren Schritt S2 eine Anpassung der Fahrzeuggeschwindigkeit auf eine Abschleppgeschwindigkeit. Bei der Abschleppgeschwindigkeit handelt es sich insbesondere um eine fest vorgegebene Geschwindigkeit. Die Anpassung der Abschleppgeschwindigkeit kann insbesondere dadurch erfolgen, dass die vom Zugfahrzeug 10 zum Zeitpunkt der Aktivierung des Abschleppmodus gefahrene Geschwindigkeit mit der Abschleppgeschwindigkeit verglichen wird. Ist die Fahrzeuggeschwindigkeit schneller als die Abschleppgeschwindigkeit, dann wird die Geschwindigkeit mit der sich das Zugfahrzeug 10 von nun an fortbewegen kann, auf den vordefinierten Wert gedrosselt. Dies wird in Figur 3 näher dargestellt.

In einem weiteren Schritt S3 kann der Abschleppmodus automatisch beendet werden. Dies erfolgt insbesondere dann, wenn in den Bilddaten ein gespanntes Abschleppseil erkannt wird und/oder wenn eine vordefinierte Zugkraft detektiert wird, die an dem Abschleppmittel bzw. Abschleppseil vorherrscht. Nach Beendigung des Abschleppmodus kann die Abschleppgeschwindigkeit wieder aufgehoben werden und der Zugfahrzeugführer kann frei über die zu fahrende Geschwindigkeit entscheiden.

Figur 3 zeigt eine schematische Darstellung eines Geschwindigkeitsverlaufs eines Zugfahrzeugs 10 während eines Abschleppvorgangs in einer Ausgestaltung. In einem Zeitpunkt t₁ wird ein Abschleppmodus aktiviert. Die Geschwindigkeit des Zugfahrzeugs 10 liegt hier oberhalb einer vordefinierten Abschleppgeschwindigkeit. Folglich wird die Geschwindigkeit gedrosselt bis eine Abschleppgeschwindigkeit vorliegt. Nach Beendigung des Abschleppmoduls, welche im Zeitpunkt t₂ vorliegt, wird die Abschleppgeschwindigkeit wieder aufgehoben und der Zugfahrzeugführer kann wieder selber über seine Fahrgeschwindigkeit entscheiden.

Figur 4 zeigt eine schematische Darstellung eines erfindungsgemäßen Kamerasystems 100 zur Erkennung eines Abschleppvorgangs in einer Ausführungsform. Das Kamerasystem 100 umfasst zumindest eine an einem Fahrzeugheck angeordnete Kamera 12, genauer eine Rückfahrkamera, zur Erfassung zumindest eines hinter dem Fahrzeug 10 liegenden Teilbereichs. Ferner umfasst das Kamerasystem 100 eine Bildverarbeitungseinrichtung 16, die so ausgebildet ist, dass sie in den erfassten Bilddaten ein Abschleppmittel 14 erkennt, wodurch ein Abschleppmodus aktiviert und/oder beendet werden kann. Das Kamerasystem umfasst zudem eine Steuereinheit 18, die derart ausgebildet ist, dass sie nach Erkennung eines Abschleppmittels 14 eine Fahrzeuggeschwindigkeit in Einklang mit einer Abschleppgeschwindigkeit bringt. Um eine im Abschleppmittel 14 herrschende Zugkraft ermitteln zu können, kann das Kamerasystem 100 zudem einen Kraftsensor 20 umfassen.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird. Auch eine Kombination der verschiedenen Ausführungsbeispiele ist möglich.

### Bezugszeichenliste

- 10: Zugfahrzeug
- 12: Kamera
- 14: Abschleppmittel
- 16: Bildverarbeitungseinrichtung
- 18: Steuereinheit
- 20: Kraftsensor
- 22: abzuschleppendes Fahrzeug
- 100: Kamerasystem
- S1 - S3: Verfahrensschritte

## Patentansprüche

1. Verfahren zur Durchführung eines Abschleppvorgangs eines Zugfahrzeugs (10) umfassend die folgenden Schritte:
a) Aktivierung eines Abschleppmodus (S1), wobei der Abschleppmodus durch die Zuhilfenahme einer Rückfahrkamera (12) zur Erfassung eines hinter dem Zugfahrzeug (10) liegenden Bereichs aktiviert wird, wobei die folgenden Schritte durchgeführt werden:
- Erfassen des hinter dem Zugfahrzeug (10) liegenden Bereichs mittels der Rückfahrkamera (12),
- Erzeugen von Bilddaten,
- Erkennen eines durchhängenden und/oder sich bewegenden Abschleppseils in den Bilddaten,
- Aktivierung des Abschleppmodus bei erkanntem durchhängenden und/oder sich bewegenden Abschleppseil,
b) Anpassung einer Fahrzeuggeschwindigkeit auf eine Abschleppgeschwindigkeit (S2).

2. Verfahren nach Anspruch 1, **dadurch gekennzeichnet, dass** der Abschleppmodus beendet wird (S3), wenn zumindest eines der folgenden Ereignisse vorliegt:
- in den Bilddaten wird ein gespanntes bzw. straffes Abschleppseil erkannt oder
- Detektieren einer vordefinierten Zugkraft an dem Abschleppseil.

3. Verfahren nach einem der Ansprüche 1 bis 2, **dadurch gekennzeichnet, dass** nach Beendigung des Abschleppmodus die Abschleppgeschwindigkeit wieder aufgehoben wird und der Zugfahrzeugführer das Zugfahrzeug (10) bevorzugt wieder mit einer von ihm gewünschten Fahrzeuggeschwindigkeit fahren kann.

4. Kraftfahrzeug (10) aufweisend ein Kamerasystem (100) zur Erkennung eines Abschleppvorgangs aufweisend zumindest eine an einem Fahrzeugheck angeordnete Rückfahrkamera (12) zur Erfassung zumindest eines hinter dem Fahrzeug (10) liegenden Teilbereichs; eine Bildverarbeitungseinrichtung (16), die so ausgebildet ist, dass sie in den erfassten Bilddaten ein durchhängendes und/oder sich bewegendes Abschleppseil erkennt, wodurch ein Abschleppmodus aktiviert wird; eine Steuereinheit (18), die derart ausgebildet ist, dass sie nach Erkennung eines durchhängenden und/oder sich bewegenden Abschleppseils durch die Bildverarbeitungseinrichtung (16) eine Fahrzeuggeschwindigkeit in Einklang mit einer Abschleppgeschwindigkeit bringt.

5. Kraftfahrzeug nach Anspruch 4, **gekennzeichnet durch** einen Kraftsensor (20) zur Messung einer Zugkraft in dem Abschleppseil.

## Claims

1. Method for carrying out a towing operation by a towing vehicle (10) comprising the following steps:
a) activating a towing mode (S1), wherein the towing mode is activated with the assistance of a reversing camera (12) for sensing an area behind the towing vehicle (10), wherein the following steps are carried out:
- sensing the area behind the towing vehicle (10) by means of the reversing camera (12),
- generating image data,
- detecting a slack or moving towing rope in the image data,
- activating the towing mode when a slack and/or moving towing rope is detected,
b) adapting a vehicle speed to a towing speed (S2).

2. Method according to Claim 1, **characterized in that** the towing mode is ended (S3) when at least one of the following events happens:
- a tensioned or taut towing rope is detected in the image data or
- a predefined tractive force on the towing rope is detected.

3. Method according to either of Claims 1 and 2, **characterized in that**, after ending of the towing mode, the towing speed is suspended and the driver of the towing vehicle can preferably drive the towing vehicle (10) again at a driving speed desired by the driver.

4. Motor vehicle (10) having a camera system (100) for detecting a towing operation, having at least one reversing camera (12), which is arranged on the rear of a vehicle and is intended for sensing at least a partial area behind the vehicle (10); an image processing device (16), which is designed such that a slack and/or moving towing rope is detected in the sensed image data, whereby a towing mode is activated; a control unit (18), which is designed in such a way that, after detection of a slack and/or moving towing rope by the image processing device (16), a vehicle speed is adjusted to a towing speed.

5. Motor vehicle according to Claim 4, **characterized by** a force sensor (20) for measuring a tractive force in the towing rope.

## Revendications

1. Procédé pour effectuer une opération de remorquage d'un véhicule tracteur (10), comprenant les étapes suivantes :
a) activation d'un mode de remorquage (S1), le mode de remorquage étant activé à l'aide d'une caméra de recul (12) destinée à détecter une zone située derrière le véhicule tracteur (10), les étapes suivantes étant exécutées :
- détection de la zone située derrière le véhicule tracteur (10) au moyen de la caméra de recul (12),
- génération de données d'image,
- reconnaissance d'un câble de remorquage détendu et/ou en mouvement dans les données d'image,
- activation du mode de remorquage lors de la reconnaissance d'un câble de remorquage détendu et/ou en mouvement,
b) adaptation de la vitesse de véhicule à une vitesse de remorquage (S2).

2. Procédé selon la revendication 1, **caractérisé en ce que** le mode de remorquage est interrompu (S3) lorsqu'au moins l'un des événements suivants se produit :
- un câble de remorquage tendu ou raide est détecté dans les données d'image ou
- détection d'une force de traction prédéfinie sur le câble de remorquage.

3. Procédé selon l'une des revendications 1 à 2, **caractérisé en ce qu'**à la fin du mode de remorquage, la vitesse de remorquage est à nouveau supprimée et le conducteur du véhicule tracteur peut à nouveau conduire le véhicule tracteur (10) de préférence à la vitesse qu'il souhaite.

4. Véhicule automobile (10) possédant un système de caméra (100) destiné à reconnaître une opération de remorquage, possédant au moins une caméra de recul (12) disposée à l'arrière d'un véhicule pour détecter au moins une zone partielle située derrière le véhicule (10) ; un dispositif de traitement d'images (16), qui est configuré de telle sorte qu'il reconnaît, dans les données d'images capturées, un câble de remorquage détendu et/ou en mouvement, ce qui active un mode de remorquage ; une unité de commande (18), qui est configurée de telle sorte qu'après la reconnaissance d'un câble de remorquage détendu et/ou en mouvement par le dispositif de traitement d'images (16), elle met une vitesse du véhicule en accord avec une vitesse de remorquage.

5. Véhicule automobile selon la revendication 4, **caractérisé par** un capteur de force (20) destiné à mesurer une force de traction dans le câble de remorquage.
